# EUROPEAN PATENT APPLICATION

(11) **EP 4 459 533 A1**
(43) Date of publication of application: **06.11.2024**
(21) Application number: 23171809.9
(22) Date of filing: 05.05.2023
(51) Int. Cl.: G06Q 30/015, G06N 5/022, G06F 16/332, G06F 16/435, G06F 40/30

(54) **METHOD AND SYSTEM FOR CONTROLLING PROVISION OF A DIGITAL PERSONAL ASSISTANT**

(71) Applicant: Koninklijke Philips N.V., 5656 AG Eindhoven (NL)
(72) Inventor: TALGORN, Elise Claude Valentine, Eindhoven (NL); HENDRIKS, Monique, Eindhoven (NL); PEREZ, Marie, 5656AG Eindhoven (NL)
(74) Representative: Philips Intellectual Property & Standards

(57) **Abstract**

A method and system for controlling the provision of a digital personal assistant (DPA) to a user. The method comprises determining a satisfaction of a user with a first instance of the DPA, and generating a second instance of the DPA in response to the satisfaction failing to meet a predetermined requirement. The second instance of the DPA does not have at least one characteristic associated with the user's satisfaction failing to meet the predetermined requirement. The first and second instances of the DPA respectively employ first and second knowledge bases associated with the user, wherein the second knowledge base is generated based on information from the first knowledge base.

## Description

### FIELD OF THE INVENTION

The invention relates to the field of digital personal assistants.

### BACKGROUND OF THE INVENTION

Digital personal assistants (also known as virtual assistants or intelligent personal assistants) can sort information, take decisions and/or perform actions on a user's behalf, and are increasingly used for a wide range of purposes, including lifestyle coaching, controlling domestic appliances, clinical decision support, device maintenance support and agenda management.

However, a user may stop using a digital personal assistant if the digital assistant makes a mistake or if the user finds interactions with the digital personal assistant frustrating. In such situations, the user will often turn to a new, different assistant. Replacement of a digital personal assistant can cause issues, as it will take some time for the new digital personal assistant to build up the knowledge required for their role.

There is therefore a need for an improved transition between digital personal assistants.

### SUMMARY OF THE INVENTION

The invention is defined by the claims.

According to examples in accordance with an aspect of the invention, there is provided a computer-implemented method for controlling the provision of a digital personal assistant to a user, wherein the method comprises: determining the user's satisfaction with a first instance of the digital personal assistant, DPA, wherein the first instance of the DPA is configured to employ a first knowledge base associated with the user; responsive to the user's satisfaction failing to meet a predetermined requirement, generating a second instance of the DPA, wherein the second instance of the DPA is devoid of one or more characteristics that contributed to the user's satisfaction failing to meet a predetermined requirement; and generating, for employment by the second instance of the DPA, a second knowledge base associated with the user, said generating of the second knowledge base being based on information from the first knowledge base.

The inventors have recognized that a digital personal assistant (DPA) has the capability to change its manifestation and social interaction with the user, thus appearing as a new, different DPA to the user while still retaining knowledge obtained from its previous relationship with the user.

This allows the DPA to maintain ongoing actions when the first instance of the DPA is replaced by the second instance, and to use the knowledge built up by the first instance to improve the DPA's performance and user interactions in the second instance, while also taking advantage of the "reset" in the emotional relationship between the DPA and user.

In some examples, determining the user's satisfaction with the first instance of the DPA comprises: analyzing an interaction of the user with the first instance of the DPA, wherein said analyzing comprises processing the interaction with at least one of: a natural language processing algorithm; a stress detection algorithm; a tone-of-voice detection algorithm; and a response timing algorithm.

These algorithms may be used to detect an emotional response of the user to the first instance of the DPA. For example, if a natural language processing algorithm identifies negative or abusive language by the user towards the DPA, this may indicate that the user is upset, angry or frustrated with the DPA.

In this way, a user's satisfaction with the first instance of the DPA may be determined during normal use of the DPA.

In some examples, determining the user's satisfaction with the first instance of the DPA comprises: communicating a request to the user, the request prompting the user to provide an indication of satisfaction with the first instance of the DPA; detecting an indication provided by user in response to the request; and determining, based on the detected indication, the user's satisfaction with the first instance of the DPA.

An indication of satisfaction provided by the user in response to a request may provide a more reliable determination of the user's satisfaction.

In some examples, a request for an indication of satisfaction may be communicated to the user in response to determining poor user satisfaction based on analyzing an interaction of the user with the first instance of the DPA. The user's response may then be used to confirm that the user is no longer satisfied with the first instance.

In other examples, a request for an indication of satisfaction may be communicated to the user at predetermined intervals (e.g., every day, weekly, monthly etc.). A frequency of requests for an indication of satisfaction may vary over the period of use of the first instance of the DPA.

In some examples, determining the user's satisfaction with the first instance of the DPA comprises: determining a satisfaction value representing a level of satisfaction with the first instance of the DPA, and wherein the predetermined requirement is that the satisfaction value exceeds a minimum threshold value.

In other words, a second instance of the DPA may be generated responsive to the satisfaction value failing to exceed the minimum threshold value. The satisfaction value may, for example, be based on analyzing a user's interaction with the first instance of the DPA and/or on an indication of user satisfaction provided by the user.

In some examples, the method further comprises: communicating, to the user, a request for an indication as to whether a new assistant is desired; and detecting an indication as to whether a new assistant is desired provided by user in response to the request, wherein: the user's satisfaction is determined to meet the predetermined requirement responsive to detecting an indication that a new assistant is not desired; and the user's satisfaction is determined to fail to meet the predetermined requirement responsive to detecting an indication that a new assistant is desired. In other words, a second instance of the DPA may be generated only when the user explicitly desires a new assistant. This reduces a likelihood of a second instance of the DPA being generated unnecessarily by a user that is quick to express dissatisfaction but is not so dissatisfied as to want a different assistant.

In some examples, the second instance of the DPA differs from the first instance of the DPA in at least one of: visual appearance; audible sound; conversational style; tone of communication; communication modality; role title; and name.

These changes aim to prevent the user from recognizing the second instance of the DPA as the same DPA as the first instance. This allows the second instance of the DPA to present itself to the user as an entirely new DPA, thus resetting an emotional relationship between the user and the DPA, enabling the DPA to continue working without its work being affected by the negative feelings the user has for the first instance of the DPA.

A more personalized DPA may need to differ more significantly between the first instance and the second instance in order to appear as a different assistant to the user. For example, a more personalized DPA may need to change more features and/or make a larger change in each feature that is changed.

In some examples, generating a second instance of the DPA comprises: determining one or more personality characteristics that contributed to the user's satisfaction failing to meet a predetermined requirement; and generating the second instance of the DPA such that the second instance of the DPA is devoid of the determined one or more personality characteristics.

In other words, the second instance of the DPA may be devoid of one or more personality characteristics that contributed to the user's satisfaction failing to meet a predetermined requirement by generating the second instance not to have those personality characteristics.

This increases a likelihood that the user will find interactions with the second instance satisfactory.

In some examples, the one or more personality characteristics comprise at least one of: a tone of voice; a conversational style; and/or a visual response to a user interaction. These are personality characteristics that a user may have a negative reaction to.

In some examples, the method further comprises: responsive to the user's satisfaction failing to meet a predetermined requirement, determining one or more behavioral characteristics associated with the user's satisfaction failing to meet the predetermined requirement; and storing information about the determined one or more behavioral characteristics in the first knowledge base.

By storing information about the determined one or more behavioral characteristics in the first knowledge base, on which the second knowledge base is based, the second instance of the DPA may access this information in order to avoid repeating the first instance's mistakes. This ensures that the second instance of the DPA is devoid of the one or more characteristics that contributed to the user's satisfaction failing to meet a predetermined requirement when one or more of these characteristics relate to a behavior of the DPA.

In some examples, the one or more behavioral characteristics comprise at least one of: a use of a trigger word; a use of a trigger topic; a repetition of questioning on a trigger topic; a depth of questioning on a trigger topic; a time between uses of a trigger word or topic; and/or a context of a use of a trigger word or topic.

A "trigger" word or topic is a word or topic that the user reacted negatively to in their interactions with the first instance of the DPA. A user may react negatively to some trigger topics whenever they are brought up, while other topics may be tolerated if asked about occasionally or only touched upon but cause a negative reaction in the user if questions on the topic are repeated or if asked about in detail. Further, some topics may be acceptable to a user in certain contexts (e.g. place, time of day etc.) but not others.

In some examples, generating a second knowledge base comprises: generating a question based on information from the first knowledge base; communication the question to user; obtaining information about the user's response to the question; and storing information in the second knowledge base based on the obtained information about the user's response.

By using the knowledge obtained by the first instance of the DPA, the second instance of the DPA can build up knowledge more efficiently while also avoiding mistakes made by the first instance.

There is also proposed a computer program comprising computer program code means adapted, when said computer program is run on a computer, to implement the method described above.

According to another aspect of the invention, there is provided a system for controlling the provision of a DPA to a user, wherein the system comprises: an analysis unit configured to determine the user's satisfaction with a first instance of the DPA, wherein the first instance of the DPA is configured to employ a first knowledge base associated with the user; and a processor arrangement configured to, responsive to the user's satisfaction failing to meet a predetermined requirement, generate a second instance of the DPA, wherein the second instance of the DPA is devoid of one or more characteristics that contributed to the user's satisfaction failing to meet a predetermined requirement, and to generate, for employment by the second instance of the DPA, a second knowledge base associated with the user, said second knowledge base being based on information from the first knowledge base.

In some examples, the analysis unit comprises a data processor configured to analyze an interaction of the user with the first instance of the DPA, wherein said analyzing comprising processing the interaction with at least one of: a natural language processing algorithm; a stress detection algorithm; a tone-of-voice detection algorithm; and a response timing algorithm.

There is also proposed a DPA system configured to provide a DPA for interaction with a user, wherein the DPA system comprises a system for controlling the provision of the DPA described above.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 illustrates a computer-implemented method for controlling the provision of a digital personal assistant to a user, according to an embodiment of the invention;
Fig. 2 illustrates an example process for the storage and use of knowledge by the DPA;
Fig. 3 illustrates an example of a semantic representation of knowledge at a time of a reset of a DPA;
Fig. 4 illustrates a semantic representation of an example subsumes relation tree for the topic "son";
Fig. 5 illustrates a semantic representation of example alternative methods of problem inference;
Fig. 6 illustrates a DPA system configured to provide a DPA for interaction with a user, according to an embodiment of the invention; and
Fig. 7 illustrates an example of a computer within which one or more parts of an embodiment may be employed.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a method and system for controlling the provision of a digital personal assistant (DPA) to a user. The method comprises determining a satisfaction of a user with a first instance of the DPA, and generating a second instance of the DPA in response to the satisfaction failing to meet a predetermined requirement. The second instance of the DPA does not have at least one characteristic associated with the user's satisfaction failing to meet the predetermined requirement. The first and second instances of the DPA respectively employ first and second knowledge bases associated with the user, wherein the second knowledge base is generated based on information from the first knowledge base.

Embodiments are at least partly based on the realization that a digital personal assistant has the capability to change its manifestation and social interaction, such that it appears to be a new digital personal assistant, while still retaining the information obtained in previous user interactions. This allows the DPA to reset its relationship with the user, starting a new relationship in which it can exploit previously-obtained knowledge in order to create an improved user experience and/or an improved result as defined by the goal of the DPA (e.g. a clinical result, a well-being improvement, a learning objective, etc.).

Illustrative embodiments may, for example, be employed in consumer digital personal assistants (e.g. that provide lifestyle coaching, mental health support, chronic disease support, home appliance control etc.) and/or professional digital personal assistants (e.g. that provide clinical decision support, device maintenance support, agenda management etc.).

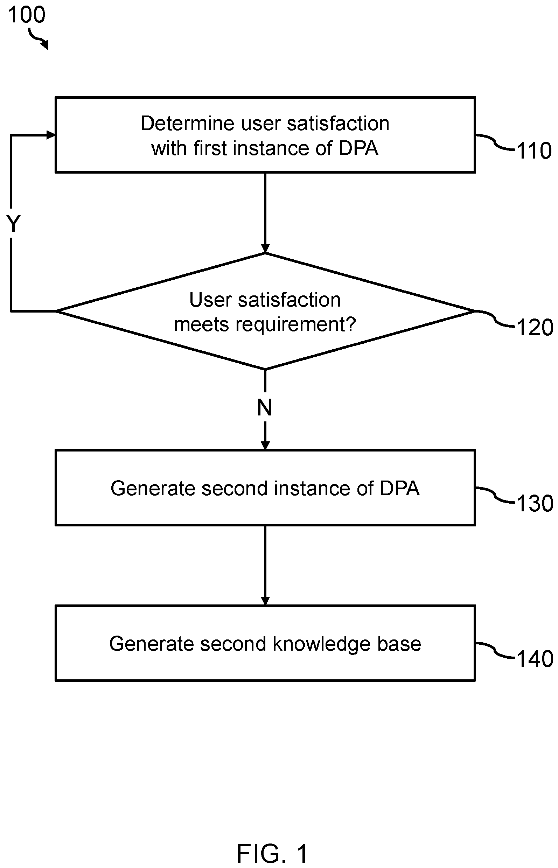

Fig. 1 illustrates a computer-implemented method 100 for controlling the provision of a digital personal assistant (DPA) to a user, according to an embodiment of the invention. The DPA may be any application that interacts with a user to provide assistance to the user, such as chatbots and voice-based virtual assistants. For example, the DPA may be an application on a phone, a tablet, a computer, a home conversational pod (e.g. a smart speaker) or an augmented reality (AR) or virtual reality (VR) headset.

The method begins at step 110, in which the user's satisfaction with a first instance of the DPA is determined.

The first instance of the DPA is a first persona or identity of the DPA. In the first instance of the DPA, the DPA employs a first knowledge base associated with the user, in which knowledge obtained by the first instance of the DPA during interactions with the user is stored in the first knowledge base and used by the first instance of the DPA in subsequent interactions.

In some examples, the step of determining the user's satisfaction with the first instance of the DPA comprises analyzing an interaction of the user with the first instance of the DPA. An interaction of the user with the first instance of the DPA may be analyzed by processing the interaction with at least one of a natural language processing (NLP) algorithm, a stress detection algorithm, a tone-of-voice detection algorithm and a response timing algorithm.

How such algorithms may be used to determine a user's satisfaction with the first instance of the DPA will be readily apparent to the skilled person. For example, a natural language processing algorithm may be used to identify whether the content of the user's responses to the DPA include positive wording that indicates user satisfaction or negative wording indicative of anger, frustration etc. A stress detection algorithm, e.g. that processes physiological measurements of the user during interactions with the DPA, may determine whether the user experiences increased stress levels when interacting with the DPA. A tone-of-voice detection algorithm may be used to distinguish between user responses given in a happy or neutral tone from those in which the user sounds upset, angry or irritated. A response timing algorithm may be used to detect whether a user is interacting with the DPA less frequently, or has stopped interacting with the DPA, which may indicate poor satisfaction with the DPA.

The outcome of the analysis of an interaction with a user with the first instance of the DPA may be a binary determination (satisfied/not satisfied), a quantitative measure of user satisfaction (e.g. a satisfaction score, a physiological measurement indicative of stress, a time since last response), or a qualitative measure of user satisfaction (e.g. "highly satisfied", "quite satisfied", "quite dissatisfied", "highly dissatisfied").

In some examples, the step of determining the user's satisfaction with the first instance of the DPA additionally or alternatively comprises communicating a request to the user, the request prompting the user to provide an indication of satisfaction with the first instance, detecting an indication provided by the user in response to the request, and determining, based on the detected indication, the user's satisfaction with the first instance of the DPA.

In other words, the user's satisfaction with the first instance of the DPA may be determined by direct feedback from the user, rather than (or in addition to) inferring the user's satisfaction from the user's interactions with the DPA during normal use.

A request for an indication of satisfaction with the first instance may, for example, be communicated to the user at predetermined intervals (e.g. daily, weekly, monthly, etc.) during use of the first instance of the DPA. In some examples, the length of the predetermined intervals may vary over the period of use of the first instance of the DPA; for instance, the DPA may request an indication of satisfaction more frequently at the beginning of its use, and then reduce a frequency of requests once the DPA has been used satisfactorily for a predetermined period.

In preferred examples, a request for an indication of satisfaction with the first instance may be communicated to the user in response to a determination of user satisfaction based on analyzing the user's interactions (e.g. as described above) indicating that the user is not satisfied with the first instance of the DPA, with the user's response to the request confirming or contradicting the determination that user satisfaction with the first instance is low. For example, in response to a determination of low user satisfaction based on an analysis of a user interaction, the first instance of the DPA may ask the user, "I can sense that you are not satisfied with my answer/how I have dealt with [topic]. Am I right?"

The DPA may request an indication of satisfaction from the user in response to each determination that the user exhibited dissatisfaction in an interaction with the DPA, or in response to a determination that a frequency of interactions in which the user exhibits dissatisfaction (or a low level of satisfaction) exceeds a predetermined frequency threshold (e.g. a request may be communicated if a user exhibits dissatisfaction in more than one in four interactions).

In some examples, the step of determining the user's satisfaction with the first instance of the DPA comprises determining a satisfaction value representing a level of satisfaction with the first instance of the DPA.

A type of a satisfaction value may depend on how the user's satisfaction is determined. For instance if a binary determination of satisfied/not satisfied is made, based on an analysis of a user interaction and/or on an indication of satisfaction from the user in response to a request, the satisfaction value may be 0 for "not satisfied" and 1 for "satisfied". If an analysis of a user interaction results in a quantitative measure of user satisfaction, this quantitative measure may be the satisfaction value (or the satisfaction value may be a combination of multiple quantitative measures obtained by separate analyses, e.g. using different algorithms). If an analysis of a user interaction results in a qualitative measure of user satisfaction, this may be converted into a satisfaction value according to predetermined rules (e.g. 4 for "highly satisfied", 3 for "quite satisfied", etc.).

At step 120, a determination as to whether the user's satisfaction meets a predetermined requirement is made.

Where the determination of the user's satisfaction with the first instance of the DPA includes a determination of a satisfaction value representing a level of satisfaction with the first instance of the DPA, the predetermined requirement may be that the satisfaction value exceeds a minimum threshold value. The minimum threshold value will, of course, depend on the type of satisfaction value (e.g. for a binary satisfaction value, the minimum threshold value would be zero - i.e. the value must be 1 in order to meet the predetermined requirement).

In some examples, the step of determining whether the user's satisfaction meets a predetermined requirement may comprise communicating to the user a request for an indication as to whether a new assistant is desired. For instance, following a user having indicated that they were not satisfied, the first instance of the DPA may say, "I am sorry I made a mistake. If you like, I can bring in one of my fellow assistants, I believe it is more skilled than I am in helping you." In response to the user providing an indication that a new assistant is not desired, a determination may be made that the user's satisfaction meets the predetermined requirement. Conversely, in response to the user providing an indication that a new assistant is desired, a determination may be made that the user's satisfaction does not meet the predetermined requirement.

In response to the user's satisfaction meeting the predetermined requirement, the user's satisfaction with the first instance of the DPA may continue to be monitored (e.g. continuously, by analyzing each interaction with the user, or at intervals, by periodically communicating a request for an indication of satisfaction). Steps 110 and 120 may continue to be repeated until it is determined that the user's satisfaction does not meet the predetermined requirement.

In response to the user's satisfaction failing to meet the predetermined requirement, the method proceeds to step 130, in which a second instance of the DPA is generated. The second instance is a different identity or persona of the DPA to the first instance and is devoid of one or more characteristics that contributed to the user's satisfaction failing to meet the predetermined requirement.

The second instance of the DPA may, for example, differ from the first instance of the DPA in at least one of visual appearance, audible sound, conversational style, tone of communication, communication modality, role title and name, in order to appear to the user as a different assistant. The feature(s) by which the second instance of the DPA differs from the first instance may depend on a type and capability of the DPA.

A change in name is a simple way for the second instance of the DPA to appear to be a different assistant from the first instance. In the case of more personalized DPAs, greater modifications may be required. For instance, in cases where the DPA is represented to the user by an avatar, the second instance of the DPA may use a different avatar to the first instance. Voice-based DPAs may use a different voice (e.g., different pitch, accent etc.) for the second instance of the DPA. The second instance of the DPA may have a different conversational style to the first instance (e.g., formal/informal, cheerful/neutral). In some examples, the second instance of the DPA may employ a different modality (in some cases, via a different device) to the first instance (e.g., a voice-based conversation rather than a type-based chatbot or vice versa). The second instance of the DPA may also present themselves as having a different role/positioning to the first instance; for example, the second instance of the DPA may call themselves a stress-managing assistant or virtual friend instead of a health coach.

As mentioned above, the second instance of the DPA is devoid of one or more characteristics that contributed to the user's satisfaction failing to meet a predetermined requirement. The one or more characteristics may comprise behavioral and/or personality characteristics. Preferably, the one or more characteristics comprises at least one behavioral characteristic. Depending on the nature of the one or more characteristics, this may be achieved at the point of generating the second instance of the DPA (e.g. for personality characteristics) and/or on an ongoing basis throughout the lifetime of the second instance, by using knowledge of the user's preferences when generating questions and/or responses in user interactions (e.g. for behavioral characteristics).

For instance, in response to the user's satisfaction failing to meet the predetermined requirement, one or more behavioral characteristics associated with the user's satisfaction failing to meet the predetermined requirement is determined. Information about the determined one or more behavioral characteristics is stored in the first knowledge base. A behavioral characteristic associated with the user's satisfaction failing to meet the predetermined requirement is a behavior of the first instance of the DPA that the user reacted negatively to (i.e. a cause of the failure to meet the predetermined requirement).

The one or more behavioral characteristics may, for example, comprise a use of a particular word (a "trigger" word) and/or bringing up a particular ("trigger") topic. The one or more behavioral characteristics may additionally or alternatively comprise a behavior associated with the use of a trigger word or topic, such as a repetition of questioning on a trigger topic (e.g. the user may be ok with one question about the topic but find several questions irritating), a depth of questioning on a trigger topic (e.g. the user may dislike being asked about a particular topic in too much detail), a time between uses of a trigger word or topic (e.g. a user may not be upset by a single question about a topic, and may not become upset if another question on the topic is asked several hours or days later, but is upset if questions on the topic are asked within seconds or minutes of each other), and a context of a user of a trigger word or topic (e.g. the user may be happy to talk about the topic at some times of day and/or in some places but not others - for example, the user may dislike discussing personal matters during work).

By storing information about the determined one or more behavioral characteristics in the first knowledge base, the second instance of the DPA may draw on this information to shape their interactions with the user, as described below. This allows the second instance of the DPA to avoid behavioral characteristics that contributed to the user's satisfaction failing to meet a predetermined requirement.

In some examples, the one or more characteristics that contributed to the user's satisfaction failing to meet a predetermined requirement may comprise one or more personality characteristics, such as one or more features of a tone of voice, conversational style and/or visual response employed by the first instance, and/or one or more specific causes of failure (i.e. behaviors) associated with the user's satisfaction failing to meet the predetermined requirement.

In some examples, the step of generating a second instance of the DPA may comprise determining one or more personality characteristics that contributed to the user's satisfaction failing to meet a predetermined requirement, and generating the second instance of the DPA such that the second instance of the DPA differs from the first instance of the DPA in at least the determined one or more characteristics.

For example, analysis of user interactions with the first instance of the DPA (e.g. using one or more of the algorithms described above) may indicate that the user is irritated by or otherwise reacts negatively to one or more features of a tone of voice, conversational style and/or visual response employed by the first instance. The DPA may identify a set of features to which the user reacted negatively (i.e. the set of features of a tone of voice, conversational style etc. used in a particular interaction in which the user was/became irritated or upset), and correlate the reaction to different sets of features to infer the feature(s) that caused the negative reaction. If the DPA does not have sufficient information to infer which feature(s) caused the negative reaction, the DPA may generate new sets of features for use in future interactions in order to obtain sufficient information.

Features of a tone of voice include an emotional tone (e.g. empathetic, dry, etc.), a tempo of speech (e.g. slow or rapid) and a use of pauses. Features of a conversational style may include a complexity (e.g. simple or elaborate wording), a conversational tone (e.g. casual, professional, etc.) and other conversational features such as whether the DPA reformulates the user's words in their responses. A visual response to a user interaction may include the display of a certain facial expression or a visual modification such as a change of color or shape.

At step 140, a second knowledge base associated with the user, for employment by the second instance of the DPA, is generated based on information from the first knowledge base. Some or all of the information stored in the first knowledge base may be copied or transferred to the second knowledge base. In particular, information about a determined cause of failure may be copied or transferred to the second knowledge base.

The second instance of the DPA uses information in the second knowledge base in their interactions with the user (e.g. to generate questions). Information obtained directly from the user by the second instance of the DPA may also be stored in the second knowledge base, to be used by the second instance of the DPA in later interactions with the user.

Preferably, the second instance of the DPA is able to distinguish between information in the second knowledge base that is based on information from the first knowledge base and information that was obtained directly from the user by the second instance of the DPA. This allows the second instance of the DPA to make use of knowledge obtained by the first instance in a way that does not alert the user to the fact that the second instance of the DPA has information that they have not been given directly.

For instance, the second knowledge base may store information based on information from the first knowledge base as implicit knowledge, and information obtained directly by the second instance of the DPA in interactions with the user as explicit knowledge. The second instance of the DPA may then exploit the implicit knowledge in interactions with the user without explicitly referring to this knowledge, for example, to determine which questions to ask in order to build up explicit knowledge in the second knowledge base without annoying or upsetting the user.

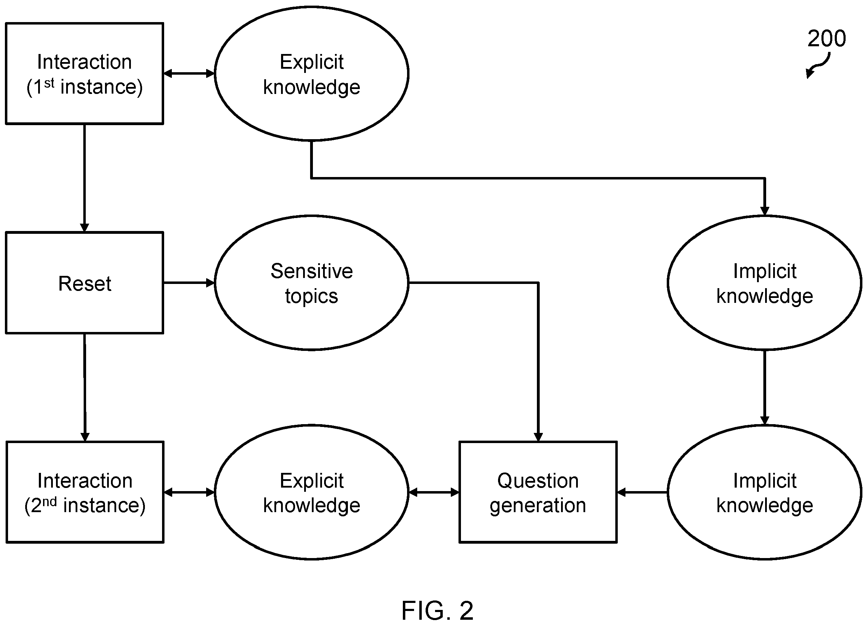

Fig. 2 illustrates an example process 200 for the storage and use of knowledge by the DPA. In an interaction between the user and a first instance of the DPA, the first instance of the DPA employs explicit knowledge stored in the first knowledge base, and information about the user obtained during the interaction is stored as explicit knowledge in the first knowledge base. The explicit knowledge may be referred to directly by the first instance of the DPA at any point in an interaction with the user.

When the DPA is reset (i.e. a second instance of the DPA is generated), causes of failure associated with the user's satisfaction failing to meet the predetermined requirement are determined, and a second knowledge base is generated. In Fig. 2, the determined causes of failure are sensitive (or "trigger") topics. Explicit knowledge from the first knowledge base is stored as implicit knowledge in the second knowledge base.

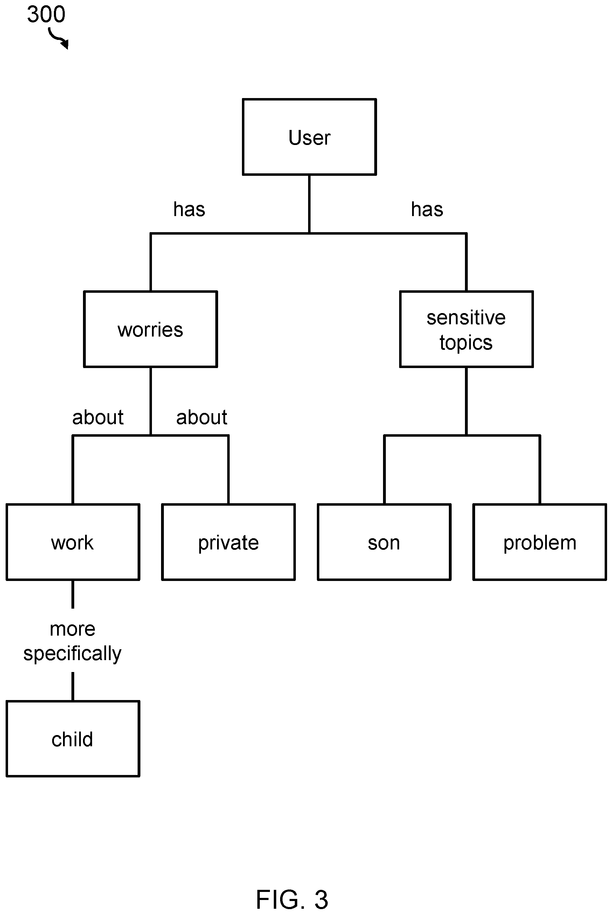

Fig. 3 illustrates an example of a semantic representation 300 of knowledge at a time of a reset of a DPA. In this example, the first instance of the DPA had determined that the user is worried about work and private issues, and that the private issues concern the user's child. On resetting the DPA, it was determined that sensitive topics for the user are "son" and "problem".

Returning to Fig. 2, the second instance of the DPA starts with no explicit knowledge that it can refer to when interacting with the user, but is able to employ the identified sensitive topics and the implicit knowledge to determine a question to ask that will rebuild the explicit knowledge base efficiently and without using trigger words or directly referring to trigger topics, by exploiting sematic relations. Once the second instance of the DPA has interacted with the user, knowledge obtained during this interaction may be stored in the second knowledge base as explicit knowledge and referred to directly by the second instance of the DPA in future interactions.

The second instance of the DPA may avoid the use of triggers by referring to trigger words or topics more obliquely, for example, by substituting a trigger word or a name of a trigger topic with a more general term that includes, but is not limited to, the trigger word or topic. For instance, if the user's son is a trigger topic for the user, the second instance of the DPA may avoid using the word "son" and instead use the more general "child" or "family".

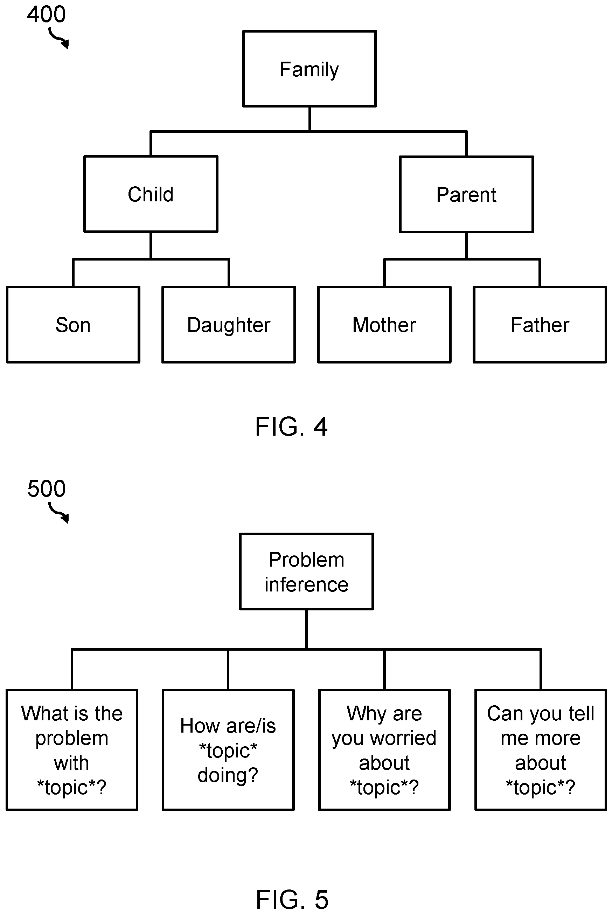

The second instance of the DPA may use "subsumes" relation trees in order to identify a more general term to use as a substitute for a trigger word or name of a trigger topic. Fig. 4 illustrates a semantic representation 400 of an example subsumes relation tree for the topic "son". The second instance of the DPA identifies a more general term by moving up the subsumes relation tree (e.g. from "son" to "child"). A yet more general term may be identified by moving further up the subsumes relation tree (e.g. from "child" to "family").

The second instance of the DPA may determine how far to move up the subsumes relation tree according to how many of the terms that fall under a higher-level term are trigger words. For instance, if a term one level up from a trigger word covers several trigger words (or if all the words it covers are trigger terms), the second instance of the DPA may select a yet more general term by moving a further level up the subsumes relation tree. In the example subsumes relation tree 400 of Fig. 4, the second instance of the DPA may substitute "child" for "son" if "son" is the only trigger word falling under "child", but use "family" in the case that both "son" and "daughter" are trigger words.

An additional or alternative way in which the second instance of the DPA may avoid the use of trigger is by generating alternative questions that serve the same purpose as questions using a trigger. For example, if "problem" is a trigger word for the user, instead of asking the user, "What is the problem with [topic]?", the second instance may select an alternative method of problem inference that does not use the word "problem". Fig. 5 illustrates a semantic representation 500 of example alternative methods of problem inference.

By asking the user a question generated based on information from the first knowledge base, the second instance of DPA obtains information about the user directly from the user's response to the question more efficiently and with a reduced likelihood of upsetting or annoying the user compared to a DPA that generates questions with no prior knowledge of the user. This directly-obtained information is then stored in the second knowledge base as explicit knowledge.

For instance, a first instance of the DPA may have the following discussion with the user:
DPA: Good morning. I see you are worried, do you have something on your mind?
User: Hm yes I guess I have.
DPA: Do you want to talk about it? Maybe it helps you take off some worries.
User: Sure, why not...
DPA: Is it about work or private?
User: A bit of both I guess, but especially at home, you know...
DPA: Is it about someone in your family?
User: Yes... It's complicated with my kid...
DPA: Hm, with your son. What is the problem with him?
User: My son has no problem! Why do you say my son has a problem?
DPA: Oh, I'm sorry, I did not mean to...
User: Whatever, stupid machine.

After resetting the DPA (i.e. generating a second instance of the DPA) and identifying the user's sensitive topics as "son" and "problem", the second instance of the DPA may have the following conversation with the user:
DPA: Hello there, how are you today?
User: I'm ok.
DPA: And how's the family?
User: Well... ok. But it's tricky with kids you know...
DPA: Tell me about it! What's happening?
User: He called earlier. And he's not going well with his studies. Etc..

In this conversation, the second instance of the DPA employs the implicit knowledge stored in the second knowledge base that had been obtained by the first instance (that there were issues with the user's son) to generate targeted questions, while using semantic relations to avoid referring directly to the identified sensitive topics. This allows the second instance of the DPA to reach the same point as the previous conversation with the first instance in fewer steps, without the user noticing that the DPA knows about the situation with the son and without upsetting the user by using negative wording (e.g. "problem") with respect to the son. The tone of the conversation is also different to the conversation the first instance of the DPA had, so the user is unlikely to make a link between the second instance of the DPA and the first instance: the second instance will appear to them to be an entirely new assistant.

While Figs 3 to 5 relate to an example involving a DPA that provides personal wellbeing support/lifestyle coaching, the skilled person will appreciate that the same techniques may be applied to other types of DPA.

For instance, a camera-based DPA may be used to help a physician with a general visual examination of a patient's body. A physician will generally ascertain a large amount of information about a patient from an initial impression (e.g. from inspecting the patient's gait, stature, posture, facial features and expression, hands and nails aspect, skin color, handshake, clothing, quality of voice, and smell), and from an initial interaction with the patient (e.g. from the ease of speech, state of the mouth, and breathing pattern). The physician will form an initial opinion on a diagnosis based on this information, and the DPA may complement this with further relevant data and suggestions that enable the physician to perform an enhanced diagnosis.

However, in some cases the DPA may irritate the physician by providing the physician with information that they already have (and may already have in more detail, due to their expertise), or information that is irrelevant for their purposes. For example, the physician may be an expert in diagnosing a condition based on a patient's speech, and may have decided to pay less attention to a patient's face because the patient is wearing make-up which would affect the accuracy of facial observations. The physician may in this case become irritated by a DPA providing observations relating to the patient's speech and face.

The DPA may learn which types of information the physician does not want advice on based on the physician's interactions with the first instance of the DPA. The second instance of the DPA may then avoid providing the physician with these types of information.

In another example, a physician using a DPA to help with treatment options may have preferences for/disinclinations towards certain treatments based on experience, intuition and/or a drive for personal research (i.e. intangible criteria for a DPA). Such a physician may, for example, become irritated by a DPA suggesting conventional options when they would prefer to consider alternative/more advanced options. By learning which suggestions irritate the physician from the physician's interactions with the first instance of the DPA, the second instance of the DPA may avoid making these suggestions.

Some clinicians may dislike the concept of being helped by artificial intelligence. An AI-based DPA (e.g. for image analysis to support a radiologist) may therefore learn how to present help in a way that the clinician will accept, by learning which aspects of the DPA the clinician is particularly irritated by, and avoiding these in the second instance of the DPA.

Further examples will be readily apparent to the skilled person.

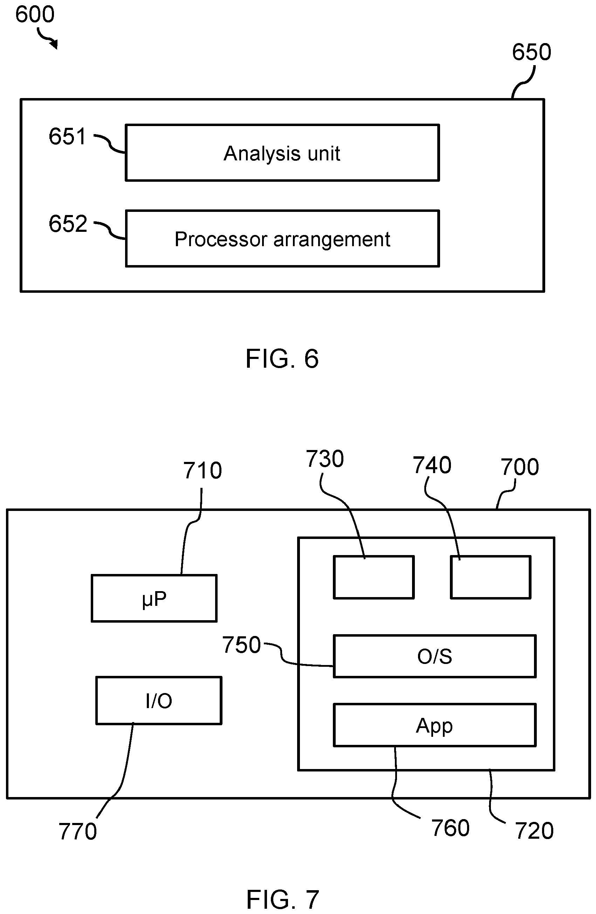

Fig. 6 illustrates a DPA system 600 configured to provide a DPA for interaction with a user, according to an embodiment of the invention. The system 600 comprises a system 650 for controlling the provision of a DPA to a user, which comprises an analysis unit 651 and a processor arrangement 652. The system 650 controlling the provision of a DPA to a user is, itself, an embodiment of the invention.

The analysis unit 651 is configured to determine the user's satisfaction with a first instance of the DPA. The first instance of the DPA is configured to employ a first knowledge base associated with the user.

The analysis unit 651 may determine the user's satisfaction with the first instance of the DPA using any of the methods described above. For example, the analysis unit may comprise a data processor configured to analyze an interaction of the user with the first instance of the DPA, by processing the interaction with at least one of: a natural language processing algorithm; a stress detection algorithm; a tone-of-voice detection algorithm; and a response timing algorithm.

The processor arrangement 652 is configured to, responsive to the user's satisfaction failing to meet a predetermined requirement, generate a second instance of the DPA, wherein the second instance of the DPA is devoid of one or more characteristics that contributed to the user's satisfaction failing to meet a predetermined requirement, and to generate, for employment by the second instance of the DPA, a second knowledge base associated with the user, said second knowledge base being based on information from the first knowledge base.

By way of further example, Fig. 7 illustrates an example of a computer 700 within which one or more parts of an embodiment may be employed. Various operations discussed above may utilize the capabilities of the computer 700. For example, one or more parts of a system for processing an image with a CNN may be incorporated in any element, module, application, and/or component discussed herein. In this regard, it is to be understood that system functional blocks can run on a single computer or may be distributed over several computers and locations (e.g. connected via internet).

The computer 700 includes, but is not limited to, PCs, workstations, laptops, PDAs, palm devices, servers, storages, and the like. Generally, in terms of hardware architecture, the computer 700 may include one or more processors 710, memory 720, and one or more I/O devices 770 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 710 is a hardware device for executing software that can be stored in the memory 720. The processor 710 can be virtually any custom made or commercially available processor, a central processing unit (CPU), a digital signal processor (DSP), or an auxiliary processor among several processors associated with the computer 700, and the processor 710 may be a semiconductor based microprocessor (in the form of a microchip) or a microprocessor.

The memory 720 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 720 may incorporate electronic, magnetic, optical, and/or other types of storage media. Note that the memory 720 can have a distributed architecture, where various components are situated remote from one another, but can be accessed by the processor 710.

The software in the memory 720 may include one or more separate programs, each of which comprises an ordered listing of executable instructions for implementing logical functions. The software in the memory 720 includes a suitable operating system (O/S) 750, compiler 740 source code 730, and one or more applications 760 in accordance with exemplary embodiments. As illustrated, the application 760 comprises numerous functional components for implementing the features and operations of the exemplary embodiments. The application 760 of the computer 700 may represent various applications, computational units, logic, functional units, processes, operations, virtual entities, and/or modules in accordance with exemplary embodiments, but the application 760 is not meant to be a limitation.

The operating system 750 controls the execution of other computer programs, and provides scheduling, input-output control, file and data management, memory management, and communication control and related services. It is contemplated by the inventors that the application 760 for implementing exemplary embodiments may be applicable on all commercially available operating systems.

Application 760 may be a source program, executable program (object code), script, or any other entity comprising a set of instructions to be performed. When a source program, then the program is usually translated via a compiler (such as the compiler 740), assembler, interpreter, or the like, which may or may not be included within the memory 720, so as to operate properly in connection with the O/S 750. Furthermore, the application 760 can be written as an object oriented programming language, which has classes of data and methods, or a procedure programming language, which has routines, subroutines, and/or functions, for example but not limited to, C, C++, C#, Pascal, BASIC, API calls, HTML, XHTML, XML, ASP scripts, JavaScript, FORTRAN, COBOL, Perl, Java, ADA, NET, and the like.

The I/O devices 770 may include input devices such as, for example but not limited to, a mouse, keyboard, scanner, microphone, camera, etc. Furthermore, the I/O devices 770 may also include output devices, for example but not limited to a printer, display, etc. Finally, the I/O devices 770 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 770 also include components for communicating over various networks, such as the Internet or intranet.

If the computer 700 is a PC, workstation, intelligent device or the like, the software in the memory 720 may further include a basic input output system (BIOS) (omitted for simplicity). The BIOS is a set of essential software routines that initialize and test hardware at startup, start the O/S 750, and support the transfer of data among the hardware devices. The BIOS is stored in some type of read-only-memory, such as ROM, PROM, EPROM, EEPROM or the like, so that the BIOS can be executed when the computer 700 is activated.

When the computer 700 is in operation, the processor 710 is configured to execute software stored within the memory 720, to communicate data to and from the memory 720, and to generally control operations of the computer 700 pursuant to the software. The application 760 and the O/S 750 are read, in whole or in part, by the processor 710, perhaps buffered within the processor 710, and then executed.

When the application 760 is implemented in software it should be noted that the application 760 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 760 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

It will be understood that the disclosed methods are computer-implemented methods. As such, there is also proposed a concept of a computer program comprising code means for implementing any described method when said program is run on a processing system.

The skilled person would be readily capable of developing a processing system for carrying out any herein described method. Thus, each step of a flow chart may represent a different action performed by a processing system, and may be performed by a respective module of the processing system.

As discussed above, the system makes use of a processing system to perform the data processing. The processing system can be implemented in numerous ways, with software and/or hardware, to perform the various functions required. The processing system typically employs one or more microprocessors that may be programmed using software (e.g. microcode) to perform the required functions. The processing system may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processing system may be associated with one or more storage media such as volatile and non-volatile computer memory such as RAM, PROM, EPROM, and EEPROM. The storage media may be encoded with one or more programs that, when executed on one or more processing systems and/or controllers, perform the required functions. Various storage media may be fixed within a processing system or controller may be transportable, such that the one or more programs stored thereon can be loaded into a processing system.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A computer-implemented method for controlling the provision of a digital personal assistant to a user, wherein the method comprises:
determining (110) the user's satisfaction with a first instance of the digital personal assistant, DPA, wherein the first instance of the DPA is configured to employ a first knowledge base associated with the user;
responsive to the user's satisfaction failing to meet a predetermined requirement, generating (130) a second instance of the DPA, wherein the second instance of the DPA is devoid of one or more characteristics that contributed to the user's satisfaction failing to meet a predetermined requirement; and
generating (140), for employment by the second instance of the DPA, a second knowledge base associated with the user, said generating of the second knowledge base being based on information from the first knowledge base.

2. The method of claim 1, wherein determining (110) the user's satisfaction with the first instance of the DPA comprises:
analyzing an interaction of the user with the first instance of the DPA, wherein said analyzing comprises processing the interaction with at least one of:
a natural language processing algorithm; a stress detection algorithm; a tone-of-voice detection algorithm; and a response timing algorithm.

3. The method of claim 1 or 2, wherein determining (110) the user's satisfaction with the first instance of the DPA comprises:
communicating a request to the user, the request prompting the user to provide an indication of satisfaction with the first instance of the DPA;
detecting an indication provided by user in response to the request; and
determining, based on the detected indication, the user's satisfaction with the first instance of the DPA.

4. The method of any of claims 1 to 3, wherein determining (110) the user's satisfaction with the first instance of the DPA comprises:
determining a satisfaction value representing a level of satisfaction with the first instance of the DPA,
and wherein the predetermined requirement is that the satisfaction value exceeds a minimum threshold value.

5. The method of any of claims 1 to 3, further comprising:
communicating, to the user, a request for an indication as to whether a new assistant is desired; and
detecting an indication as to whether a new assistant is desired provided by user in response to the request,
wherein:
the user's satisfaction is determined to meet the predetermined requirement responsive to detecting an indication that a new assistant is not desired; and
the user's satisfaction is determined to fail to meet the predetermined requirement responsive to detecting an indication that a new assistant is desired.

6. The method of any of claims 1 to 5, wherein the second instance of the DPA differs from the first instance of the DPA in at least one of: visual appearance; audible sound; conversational style; tone of communication; communication modality; role title; and name.

7. The method of any of claims 1 to 6, wherein generating a second instance of the DPA comprises:
determining one or more personality characteristics that contributed to the user's satisfaction failing to meet a predetermined requirement; and
generating the second instance of the DPA such that the second instance of the DPA is devoid of the determined one or more personality characteristics.

8. The method of claim 7, wherein the one or more personality characteristics comprise at least one of: a tone of voice; a conversational style; and/or a visual response to a user interaction.

9. The method of any of claims 1 to 8, further comprising:
responsive to the user's satisfaction failing to meet a predetermined requirement, determining one or more behavioral characteristics associated with the user's satisfaction failing to meet the predetermined requirement; and
storing information about the determined one or more behavioral characteristics in the first knowledge base.

10. The method of claim 9, wherein the one or more behavioral characteristics comprises at least one of: a use of a trigger word; a use of a trigger topic; a repetition of questioning on a trigger topic; a depth of questioning on a trigger topic; a time between uses of a trigger word or topic; and/or a context of a use of a trigger word or topic.

11. The method of any of claims 1 to 10 wherein generating a second knowledge base comprises:
generating a question based on information from the first knowledge base;
communication the question to user;
obtaining information about the user's response to the question; and
storing information in the second knowledge base based on the obtained information about the user's response.

12. A computer program comprising computer program code means adapted, when said computer program is run on a computer, to implement the method of any of claims 1-11.

13. A system for controlling the provision of a DPA to a user, wherein the system comprises:
an analysis unit (651) configured to determine the user's satisfaction with a first instance of the DPA, wherein the first instance of the DPA is configured to employ a first knowledge base associated with the user; and
a processor arrangement (652) configured to, responsive to the user's satisfaction failing to meet a predetermined requirement, generate a second instance of the DPA, wherein the second instance of the DPA is devoid of one or more characteristics that contributed to the user's satisfaction failing to meet a predetermined requirement, and to generate, for employment by the second instance of the DPA, a second knowledge base associated with the user, said second knowledge base being based on information from the first knowledge base.

14. The system of claim 13, wherein the analysis unit comprises a data processor configured to analyze an interaction of the user with the first instance of the DPA, wherein said analyzing comprising processing the interaction with at least one of: a natural language processing algorithm; a stress detection algorithm; a tone-of-voice detection algorithm; and a response timing algorithm.

15. A DPA system configured to provide a DPA for interaction with a user, wherein the DPA system comprises a system for controlling the provision of the DPA according to any of claims 13 to 14.
